# EUROPEAN PATENT APPLICATION

(11) **EP 3 636 705 A1**
(43) Date of publication of application: **15.04.2020**
(21) Application number: 18813412.6
(22) Date of filing: 10.04.2018
(51) Int. Cl.: C08L 7/00, B60C 1/00, B60C 11/00, C08K 3/04, C08K 3/30, C08K 3/36, C08K 5/053

(54) **RUBBER COMPOSITION, CROSSLINKED RUBBER COMPOSITION, RUBBER ARTICLE, AND TIRE**

(30) Priority: 09.06.2017 JP 2017114654
(71) Applicant: Bridgestone Corporation, Tokyo 104-8340 (JP)
(72) Inventor: SHODA Yasuhiro, Tokyo 104-8340 (JP)
(74) Representative: Oxley, Robin John George
(86) International application number: PCT/JP2018/015110
(87) International publication number: WO 2018/225373

(57) **Abstract**

Disclosed is a rubber composition which comprise: a rubber component containing 30% by mass or more of a natural rubber; and 0.1 parts by mass or more and less than 5.0 parts by mass of a polyol per 100 parts by mass of the rubber component, wherein the rubber composition has a 300% modulus (M300) of less than 7MPa.

## Description

### TECHNICAL FIELD

The present disclosure relates to rubber compositions, cross-linked rubber compositions, rubber articles, and tires.

### BACKGROUND

In order to enhance functions of rubber compositions and cross-linked rubbers obtained by cross-linking the rubber compositions, various components have been used as additives for rubber compositions.

For example, PTL 1 discloses a technique for improving the adhesion of rubber compositions with a steel cord upon vulcanization bonding as well as the hardness of rubber by blending (A) 100 parts by weight of a rubber selected from natural rubber, styrene-butadiene copolymer rubber, butadiene rubber, isoprene rubber, acrylonitrile butadiene copolymer rubber, chloroprene rubber, butyl rubber, and halogenated butyl rubber with (B) 0.5 to 10 parts by weight of carbohydrate, (C) 0.5 to 10 parts by weight of methoxylated methylol melamine resin, and (D) 0.05 to 1 part by weight of carboxylic acid cobalt salt in terms of cobalt amount.

PTL 2 discloses a technique for accomplishing wear resistance and wet performance/on-ice performance of tires at the same time by including in a rubber composition a specific diene rubber and silica whose glass transition temperature and CTAB adsorption specific surface area have been regulated to fall within respective specific ranges.

### CITATION LIST

### Patent Literature

PTL 1: JPH07118457A
PTL 2: JP201647888A

### SUMMARY

### (Technical Problem)

However, as to the technique disclosed in PTL 1, vulcanized rubber compositions obtained from the rubber compositions show poor crack resistance as well as poor wear resistance under stringent conditions (high severity conditions). Taking their applications to rubber articles such as tires into consideration, further improvements have been desired.

As to the technique disclosed in PTL 2, due to the low elastic modulus of the rubber compositions, sufficient effects have not been obtained with regard to crack resistance of vulcanized rubber compositions when they are greatly deformed, as well as with regard to wear resistance. Thus, further improvements have been desired.

An object of the present disclosure is therefore to provide a rubber composition having good crack resistance and good wear resistance. Another object of the present disclosure is to provide a cross-linked rubber composition, a rubber article and a tire, which have good crack resistance and good wear resistance.

### (Solution to Problem)

The inventors have made extensive studies to improve crack resistance and wear resistance. As a result, they discovered that, by adding into a rubber composition which comprises a specific content of a natural rubber a specific content of a polyol, interactions are established between the rubber component and additives (those other than the polyol contained in the rubber composition), so that improvements in crack resistance and wear resistance can be expected even when the rubber composition has a low 300% modulus (M300) and has been greatly deformed after vulcanization.

Specifically, the rubber composition disclosed herein comprises a rubber component containing 30% by mass or more of a natural rubber, and 0.1 parts by mass or more and less than 5.0 parts by mass of a polyol per 100 parts by mass of the rubber component, wherein the rubber composition has a 300% modulus (M300) of less than 7MPa.

With this configuration, good crack resistance and good wear resistance can be accomplished.

As to the rubber composition disclosed herein, it is preferred that the polyol has more than 3 hydroxyl groups. This is because better crack resistance and better wear resistance can be accomplished.

As to the rubber composition disclosed herein, it is also preferred that the ratio of the number of hydroxyl groups to the number of carbon atoms of the polyol is greater than 0.5. This is because better crack resistance and better wear resistance can be accomplished.

As to the rubber composition disclosed herein, it is also preferred that the polyol has a melting point of lower than 160°C. This is because the rubber composition can have improved solubility during kneading and/or vulcanization reaction.

As to the rubber composition disclosed herein, it is also preferred that the polyol comprises a linear polyol. This is because better crack resistance and better wear resistance can be accomplished.

As to the rubber composition disclosed herein, it is also preferred that the polyol is at least one member selected from the group consisting of xylitol, sorbitol, mannitol, and galactitol. This is because better crack resistance and better wear resistance can be accomplished.

As to the rubber composition disclosed herein, it is also preferred that the content of the polyol is 1.5 parts by mass to 4.0 parts by mass per 100 parts by mass of the rubber component. This is because better crack resistance and better wear resistance can be accomplished.

It is also preferred that the rubber composition disclosed herein further comprises less than 40 parts by mass of carbon black per 100 parts by mass of the rubber component. It is more preferred that the rubber composition disclosed herein further comprises silica and the total content of silica and carbon black is greater than 70 parts by mass per 100 parts by mass of the rubber component. It is also preferred that the rubber composition disclosed herein further comprises 15 parts by mass or more of a softener per 100 parts by mass of the rubber component. This is because better wear resistance can be accomplished.

It is also preferred that the rubber composition disclosed herein further comprises sulfur and a vulcanization accelerator and the content of the vulcanization accelerator is smaller than the content of sulfur. This is because the elastic modulus is kept low, so that better wear resistance can be accomplished.

The rubber article disclosed herein is formed using the rubber composition described above.

With this configuration, good crack resistance and good wear resistance can be accomplished.

The tire disclosed herein is formed using the rubber composition described above.

With this configuration, good crack resistance and higher wear resistance can be accomplished.

### (Advantageous Effect)

According to the present disclosure, it is possible to provide a rubber composition having good crack resistance and good wear resistance. According to the present disclosure, it is also possible to provide a cross-linked rubber composition, a rubber article and a tire, which have good crack resistance and good wear resistance.

### DETAILED DESCRIPTION

Embodiments of the present disclosure will be described in detail below.

### (Rubber Composition)

The rubber composition disclosed herein is a rubber composition which comprises a rubber component and a polyol and has a 300% modulus (M300) of less than 7 MPa.

M300 refers to a tensile stress in MPa at 300% elongation. By reducing M300 to as low as less than 7 MPa, it is possible to improve wet performance and on-ice performance when the rubber composition has been applied to a tire. From the same point of view, M300 is preferably 6 MPa or less, and more preferably 5 MPa or less. The lower limit of M300 is not limited to a particular value but is preferably around 3MPa. M300 herein can be measured in accordance with JIS K6251:2010.

### • Rubber Component

The rubber component contained in the rubber composition disclosed herein comprises 30% by mass or more of a natural rubber. When the rubber component comprises 30% by mass or more of a natural rubber, it is possible to obtain good crack resistance and good wear resistance. In addition to the natural rubber, the rubber component may comprise any synthetic rubber.

It should be noted it is preferred that the rubber component comprises a synthetic diene rubber from the viewpoint that an effect of improving interactions between the rubber component and additives by means of a polyol (later described) is obtained thus resulting in better crack resistance and better wear resistance.

Examples of synthetic diene rubbers include, for example, synthetic polyisoprene (IR), styrene-butadiene copolymer rubber (SBR), and polybutadiene rubber (BR). As for such synthetic diene rubbers to be included in the rubber component, one type of synthetic diene rubbers may be included singly or a blend of two or more types of synthetic diene rubbers may be included.

The content of a diene rubber including a natural rubber in the rubber component needs to be 30% by mass or more, but more preferably 50% by mass or more, and particularly preferably 100% by mass, from the viewpoint of keeping lower energy loss.

The natural rubber content in the rubber component needs to be 30% by mass or more, but preferably 50% by mass or more, and more preferably 90% by mass or more.

### • Polyol

In addition to the rubber component described above, the rubber composition disclosed herein further comprises 0.1 parts by mass and less than 5.0 parts by mass of a polyol per 100 parts by mass of the rubber component.

The polyol in the rubber composition enhances interactions between rubber molecules in the rubber component and additives, allowing a cross-linked rubber to have uniform physical characteristics. As a consequence, crack resistance and wear resistance can be improved even when M300 is as low as less than 7MPa. If the polyol content is less than 0.1 parts by mass per 100 parts by mass of the rubber component, there is concern that a sufficient effect of improving crack resistance and wear resistance cannot be obtained due to too low amounts of the polyol. On the other hand, if the polyol content is 5.0 parts by mass or more per 100 parts by mass of the rubber component, there is concern that crack resistance decreases due to too high amounts of the polyol.

From the same point of view, it is preferred that the polyol content is 1.5 parts by mass to 4.0 parts by mass per 100 parts by mass of the rubber component.

It is preferred that the polyol has more than 3 hydroxyl groups, more preferably has 5 or more hydroxyl groups. This is because stronger interactions are established between the rubber component and additives due to the presence of many hydroxyl groups in the polyol, whereby good crack resistance and good wear resistance can be accomplished.

As to the polyol, it is preferred that the ratio X_{OH}/X_{C} which is the ratio of the number of hydroxyl groups (X_{OH}) to the number of carbon atoms (Xc) is greater than 0.5, and more preferably 1.0 or more. This is because stronger interactions are established between the rubber component and additives due to the presence of relatively many hydroxyl groups in the polyol, whereby good crack resistance and good wear resistance can be accomplished.

It is preferred that the linear polyol and cyclic polyol both have a melting point of lower than 160°C. This is because the rubber composition can have improved solubility during kneading and/or vulcanization reaction.

The polyol is not limited to a particular type and any linear or cyclic polyol known in the art can be used. The polyol may be composed of one type of polyols or may be composed of two or more types of polyols.

It should be noted that from the viewpoint that higher crack resistance and higher wear resistance can be obtained at the same time, it is preferred that the polyol comprises a linear polyol, and more preferably comprises both linear and cyclic polyols.

The linear polyol is not limited to a particular type as long as it is a linear polyhydric alcohol. Among linear polyols, it is preferred to use at least one linear polyol selected from the group consisting of xylitol, sorbitol, mannitol, and galactitol. This is because stronger interactions are established between the rubber molecules and additives, whereby good crack resistance and good wear resistance can be accomplished.

The cyclic polyol is not limited to a particular type as long as it is a cyclic polyhydric alcohol. Examples of cyclic polyols include glucose, xylose, fructose, maltose, and quebrachitol. Among such cyclic polyols, preferred are cyclic monosaccharides such as glucose and xylose. This is because stronger interactions are established between the rubber molecules and additives, whereby good crack resistance and good wear resistance can be accomplished.

### • Filler

In addition to the rubber component and polyol described above, the rubber composition disclosed herein can further comprise a filler.

It is possible to improve such characteristics as low energy loss and/or wear resistance by including a filler in combination with the rubber component.

The filler content is not limited to a particular value but is preferably 10 parts by mass to 150 parts by mass, more preferably 15 parts by mass to 100 parts by mass, and particularly preferably 20 parts by mass to 80 parts by mass, per 100 parts by mass of the rubber component. This is because by setting a proper filler content, it is possible to improve such tire characteristics as low energy loss and/or wear resistance. If the filler content is less than 10 parts by mass, there is concern that sufficient wear resistance cannot be obtained. If the filler content is greater than 150 parts by mass, there is concern that sufficiently low energy loss cannot be achieved.

The filler is not limited to a particular type. For example, carbon black, silica, and other inorganic fillers can be included.

As the filler it is preferred to use carbon black, or carbon black and silica. This is because lower energy loss can be obtained and also crack resistance and wear resistance can be improved.

Examples of carbon blacks include GPF, FEF, SRF, HAF, ISAF, IISAF, and SAF carbon blacks. These carbon blacks may be used singly or in combination of two or more types.

The carbon black content is preferably less than 40 parts by mass, and more preferably 20 parts by mass or less, per 100 parts by mass of the rubber component. If the carbon black content is 40 parts by mass or more per 100 parts by mass of the rubber component, there is concern that the elastic modulus of the rubber increases.

Examples of silicas include wet silica, dry silica, and colloidal silica. These silicas may be used singly or in combination of two or more types.

The silica content is not limited to a particular value but the silica content in terms of the total content of silica and carbon black (silica content + carbon black content) is preferably greater than 70 parts by mass per 100 parts by mass of the rubber component. This is because reinforcement of the rubber composition can be increased, so that better crack resistance and better wear resistance can be accomplished.

As other inorganic fillers, it is also possible to use, for example, an inorganic compound represented by the following formula (I):

nM·xSiO_{Y}·_{z}H₂O... (I)

where M is at least one member selected from the group consisting of a metal selected from the group consisting of aluminum, magnesium, titanium, calcium, and zirconium, oxides or hydroxides of these metals and hydrates thereof, and carbonates of these metals; and n, x, y and z represent an integer of 1 to 5, an integer of 0 to 10, an integer of 2 to 5, and an integer of 0 to 10, respectively.

Examples of the inorganic compound represented by formula (I) above include alumina (Al₂O₃) such as γ-alumina and α-alumina; alumina monohydrate (Al₂O₃-H₂O) such as boehmite and diaspore; aluminum hydroxide [Al(OH)₃] such as gibbsite and bayerite; aluminum carbonate [Al₂(CO₃)₃], magnesium hydroxide [Mg(OH)₂], magnesium oxide (MgO), magnesium carbonate (MgCOs), talc (3MgO·4SiO_{2·}H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO_{5·}Al₄, 3SiO₄·5H₂O, etc.), magnesium silicate (Mg₂SiO₄, MgSiO₃, etc.), calcium silicate (Ca₂SiO₄, etc.), aluminum calcium silicate (Al₂O₃·CaO·2SiO₂, etc.), magnesium calcium silicate (CaMgSiO₄), calcium carbonate (CaCO₃), zirconium oxide (ZrO₂), zirconium hydroxide [ZrO(OH₂)·nH₂O], zirconium carbonate [Zr(CO₃)₂], and crystalline aluminosilicates containing hydrogen, alkali metal or alkaline earth metal for correcting charge, such as various zeolites.

### • Other Components

In addition to the rubber component, polyol and filler described above, the rubber composition disclosed herein can further comprise any desired compounding agents commonly used in rubber industries, such as, for example, cross-linkers, vulcanization accelerators, softeners, resins, silane coupling agents, antioxidants, and zinc white, to an extent that the object of the present disclosure is not compromised. Commercially available compounding agents can be suitably used.

Cross-linkers can be those known in the art and are not limited to a particular type. Sulfur can be suitably used herein as a cross-linker. It is preferred that the cross-linker content is usually 0.6 parts by mass to 2.5 parts by mass, particularly 1.0 part by mass to 2.3 parts by mass, per 100 parts by mass of the rubber component. A cross-linker content of less than 0.6 parts by mass may result in failure to obtain a sufficient cross-linking effect. On the other hand, a cross-linker content of greater than 2.5 parts by mass may result in reduced rubber strength, for example.

When sulfur is to be used as the cross-linker, it is preferred that the rubber composition comprises a vulcanization accelerator. Vulcanization accelerators can be those known in the art and are not limited to a particular type. Examples of vulcanization accelerators include sulfenamide vulcanization accelerators such as CBS (N-cyclohexyl-2-benzothiazylsulfenamide), TBBS (N-t-butyl-2-benzothiazylsulfenamide), and TBSI (n-t-butyl-2-benzothiazylsulfenimide); guanidine vulcanization accelerators such as DPG (diphenylguanidine); thiuram vulcanization accelerators such as tetraoctylthiuram disulfide and tetrabenzylthiuram disulfide; zinc dialkyldithiophosphates; and so forth. The vulcanization accelerator content is preferably smaller than the sulfur content, and more preferably around 0.5 parts by mass to 2.5 parts by mass per 100 parts by mass of the rubber component.

It is also preferred that the rubber composition disclosed herein further comprises a softener from the viewpoint that it increases the rubber flexibility and thereby allow better wet performance and better on-ice performance to be accomplished. Softeners can be those known in the art and are not limited to a particular type. Examples of softeners include petroleum softeners such as aroma oil, paraffin oil and naphthenic oil, and plant softeners such as palm oil, castor oil, cottonseed oil and soybean oil. For use, one type or two or more types of these softeners can be chosen as appropriate.

When a softener is to be included in the rubber composition, preferred among such softeners from the viewpoint of easy handling are those liquid at normal temperature (e.g., 25°C), e.g., petroleum softeners such as aroma oil, paraffin oil and naphthenic oil.

Further, when a softener is to be included in the rubber composition, the softener content is preferably 15 parts by mass or more, and more preferably 15 parts by mass to 30 parts by mass, per 100 parts by mass of the rubber component. This is because good crack resistance can be obtained as well while allowing better wet performance and better on-ice performance to be accomplished.

When silica is to be included as the filler in the rubber composition, it is preferred that the rubber composition further comprises a silane coupling agent. This is because effects of reinforcement and low energy loss by silica can be further increased. Silane coupling agents known in the art can be used as appropriate. A preferred silane coupling agent content differs depending on, for example, the type of the silane coupling agent used. The silane coupling agent content preferably ranges from 2% by mass to 25% by mass, more preferably 2% by mass to 20% by mass, and particularly preferably 5% by mass to 18% by mass, with respect to silica. A silane coupling agent content of less than 2% by mass makes it difficult for the silane coupling to sufficiently exert its effect. A silane coupling agent content of greater than 25% by mass may cause gelation of the rubber component.

### • Method of Producing Rubber Composition

The method of producing the rubber composition disclosed herein is not limited to a particular method. For example, the rubber composition can be obtained by blending and kneading the rubber component, polyol and other optional compounding agents by known methods.

The rubber composition disclosed herein may be subjected to a cross-linking reaction. The resulting cross-linked rubber composition has good crack resistance and good wear resistance.

Vulcanization is one type of cross-linking. The condition used for vulcanization is not limited to a particular one and vulcanization can be effected under any condition known in the art. For example, vulcanization is effected at a temperature of 100°C or higher, preferably 125°C to 200°C, and more preferably 130°C to 180°C.

### (Rubber Article)

The rubber article disclosed herein is formed using the rubber composition disclosed herein which has been described above. With the rubber composition disclosed herein being included as a material of a rubber article, it is possible for the rubber article to have good crack resistance and good wear resistance.

The rubber article is not limited to a particular type and examples thereof include tires, belts, hoses, rubber crawlers, anti-vibration rubbers, and seismic isolation rubbers.

### (Tire)

The tire disclosed herein is formed using the rubber composition disclosed herein which has been described above. With the rubber composition disclosed herein being included as a tire material, it is possible for the tire to have good crack resistance and good wear resistance.

It is preferred that the tire disclosed herein is used as a winter tire. This is because the rubber composition disclosed herein which is used as the tire material has a 300% modulus (M300) of as low as less than 7 MPa and hence shows good on-ice performance.

As to a part of the tire to which the rubber composition is to be applied, it is preferred that the rubber composition is applied to the tread of the tire. A tire whose tread comprises the rubber composition disclosed herein has good crack resistance and good wear resistance.

The tire disclosed herein is not limited to a particular type so long as the rubber composition disclosed herein is used for any of its tire members, and can be manufactured in accordance with common procedures. As to gases for filling the tire, it is possible to use, in addition to normal air or air with adjusted partial oxygen pressure, nitrogen, argon, helium and other inert gases.

### EXAMPLES

The present disclosure will be described in more detail below based on Examples, which however shall not be construed as limiting the scope of the present disclosure.

### (Examples 1-1 to 1-7, Comparative Examples 1-1 to 1-4)

Rubber composition samples were prepared by blending and kneading the components in common procedures according to the recipes shown in Tables 1A to 1C.

### (Examples 2-1 to 2-5, Comparative Examples 2-1 to 2-3)

Rubber composition samples were prepared by blending and kneading the components in common procedures according to the recipes shown in Table 2.

Each obtained sample was subjected to vulcanization and processed into a ring-shaped specimen. For each specimen the modulus at 300% elongation (M300) was measured in accordance with JIS K6251:2010 in a tensile test at a tensile speed of 300 mm/min.

### <Evaluations>

The following evaluations (1) to (3) were performed on the obtained rubber composition samples.

### (1) Vulcanization Time

The vulcanization time of each rubber composition sample was evaluated using a Curelastometer (JSR Corporation). Specifically, the time it took for the torsion torque measured by the Curelastometer to reach a value that is 10% of the difference between the maximum and minimum values + minimum value (i.e., T10) was measured.

The values of the vulcanization time of Comparative Examples 1-1 and 1-2 were indexed on the basis of T10 of Comparative Example 1-1 (taken as 100) and are shown in Table 1A. The values of the vulcanization time of Example 1-1 and Comparative Example 1-3 were indexed on the basis of T10 of Comparative Example 1-3 (taken as 100) and are shown in Table 1B. The values of the vulcanization time of Example 1-2 to 1-7 and Comparative Example 1-4 were indexed on the basis of T10 of Comparative Example 1-4 (taken as 100) and are shown in Table 1C. The values of the vulcanization time of Example 2-1 to 2-5 and Comparative Examples 2-1 to 2-3 were indexed on the basis of the vulcanization time of Comparative Example 2-1 (taken as 100) and are shown in Table 2. The lower the values shown in Tables 1A to 1C and Table 2, the shorter the vulcanization time and better results.

### (2) Wear Resistance

The obtained rubber composition samples were subjected to vulcanization. In accordance with JIS K6264-2, the wear amount was then measured at 23°C using a Lambourn abrasion tester and a reciprocal of the measured value was calculated.

The values of the wear amount of Comparative Examples 1-1 and 1-2 were indexed on the basis of the reciprocal of the wear amount of Comparative Example 1-1 (taken as 100) and are shown in Table 1A. The values of the wear amount of Example 1-1 and Comparative Example 1-3 were indexed on the basis of the reciprocal of the wear amount of Comparative Example 1-3 (taken as 100) and are shown in Table 1B. The values of the wear amount of Examples 1-2 to 1-7 and Comparative Example 1-4 were indexed on the basis of the reciprocal of the wear amount of Comparative Example 1-4 (taken as 100) and are shown in Table 1C. The values of the wear amount of Examples 2-1 to 2-5 and Comparative Examples 2-1 to 2-3 were indexed on the basis of the reciprocal of the wear amount of Comparative Example 2-1 (taken as 100) and are shown in Table 2. The higher the values shown in Tables 1A to 1C and Table 2, the better the wear resistance and better results.

### (3) Tear Strength (Crack Resistance)

The obtained rubber composition samples were subjected to vulcanization. Using a tensile tester (Shimadzu Corporation), the tear strength was measured in trouser shape in accordance with JIS K6252-1.

The values of the tear strength of Comparative Examples 1-1 and 1-2 were indexed on the basis of the tear strength of Comparative Example 1-1 (taken as 100) and are shown in Table 1A. The values of the tear strength of Example 1-1 and Comparative Example 1-3 were indexed on the basis of the tear strength of Comparative Example 1-3 (taken as 100) and are shown in Table 1B. The values of the tear strength of Examples 1-2 to 1-7 and Comparative Example 1-4 were indexed on the basis of the tear strength of Comparative Example 1-4 (taken as 100) and are shown in Table 1C. The values of the tear strength of Examples 2-1 to 2-5 and Comparative Examples 2-1 to 2-3 were indexed on the basis of the tear strength of Comparative Example 2-1 (taken as 100) and are shown in Table 2. The higher the values shown in Tables 1A to 1C and Table 2, the better the crack resistance.

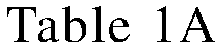

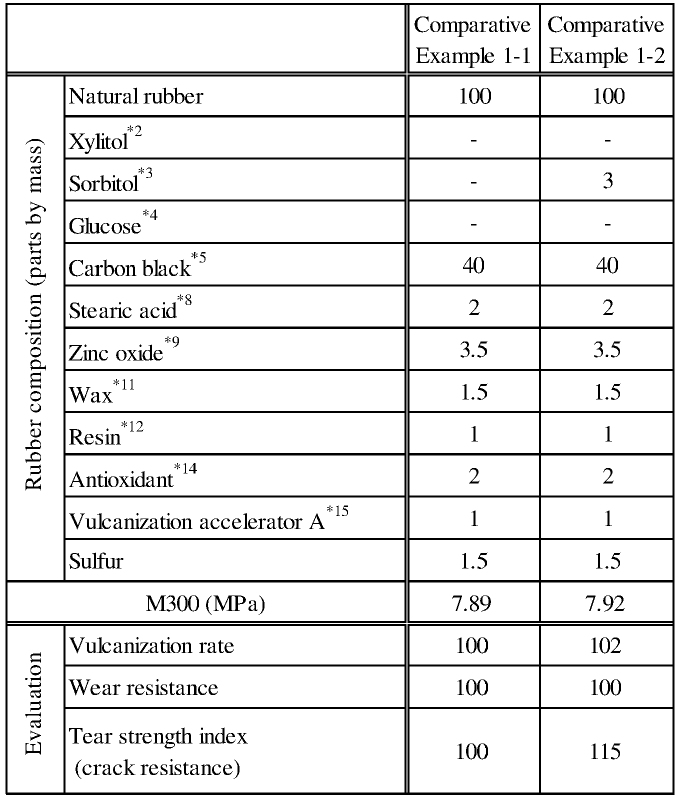

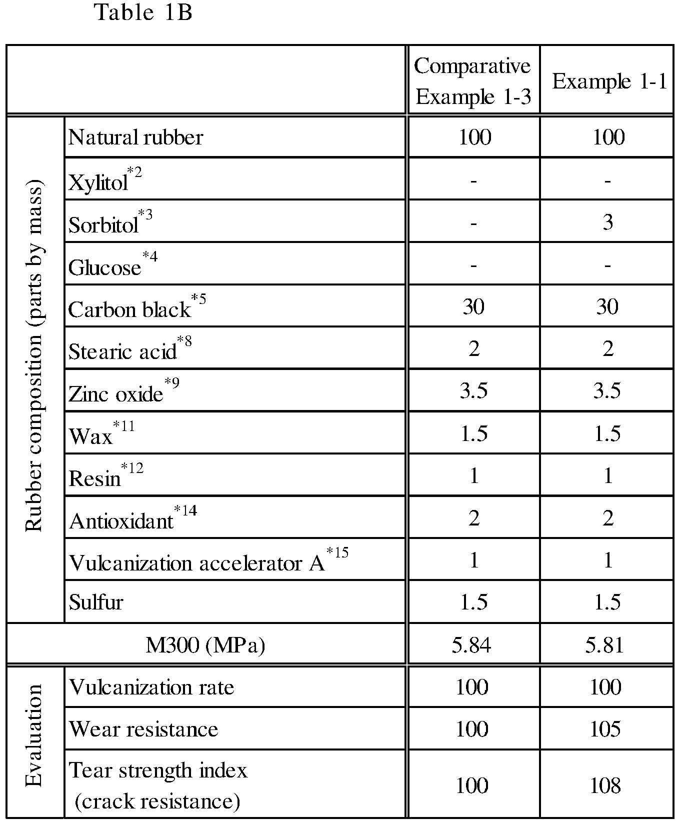

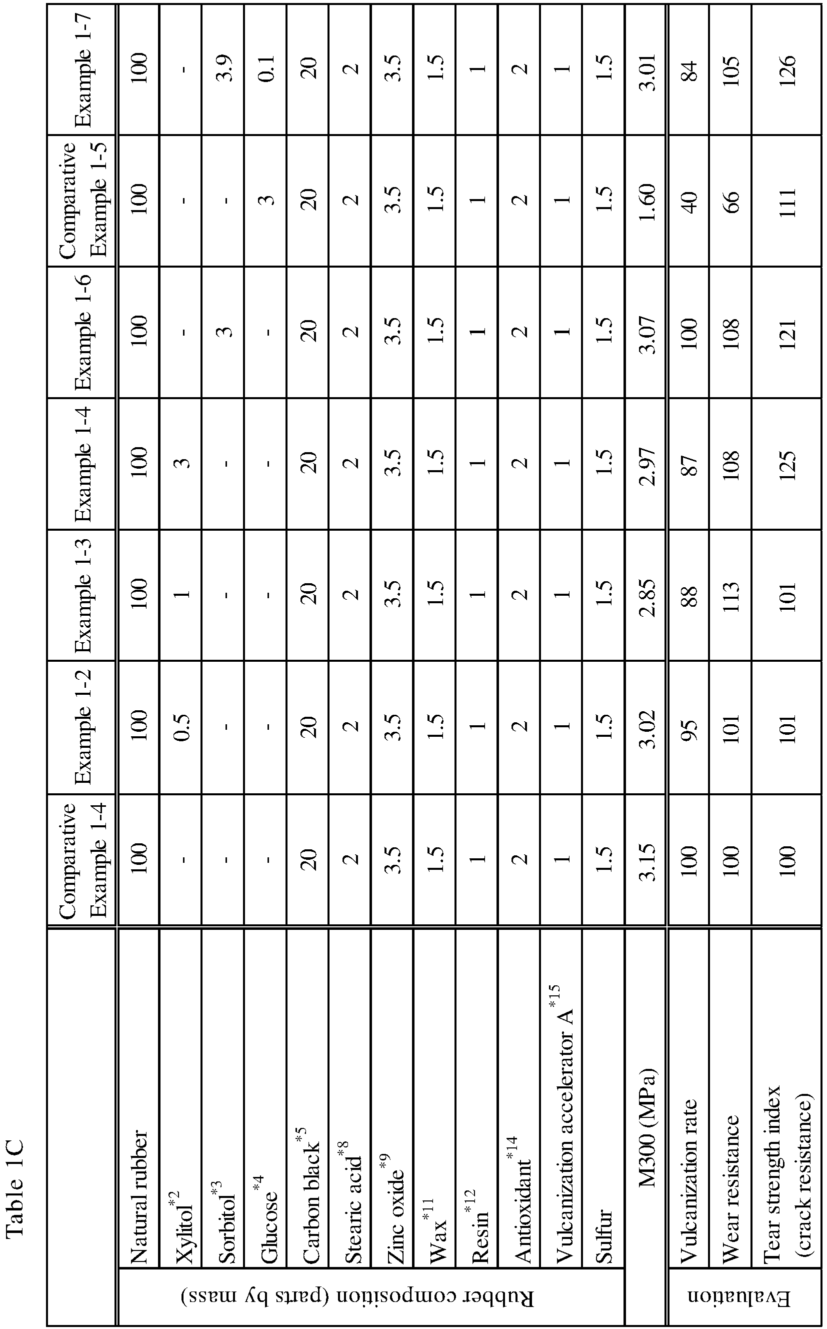

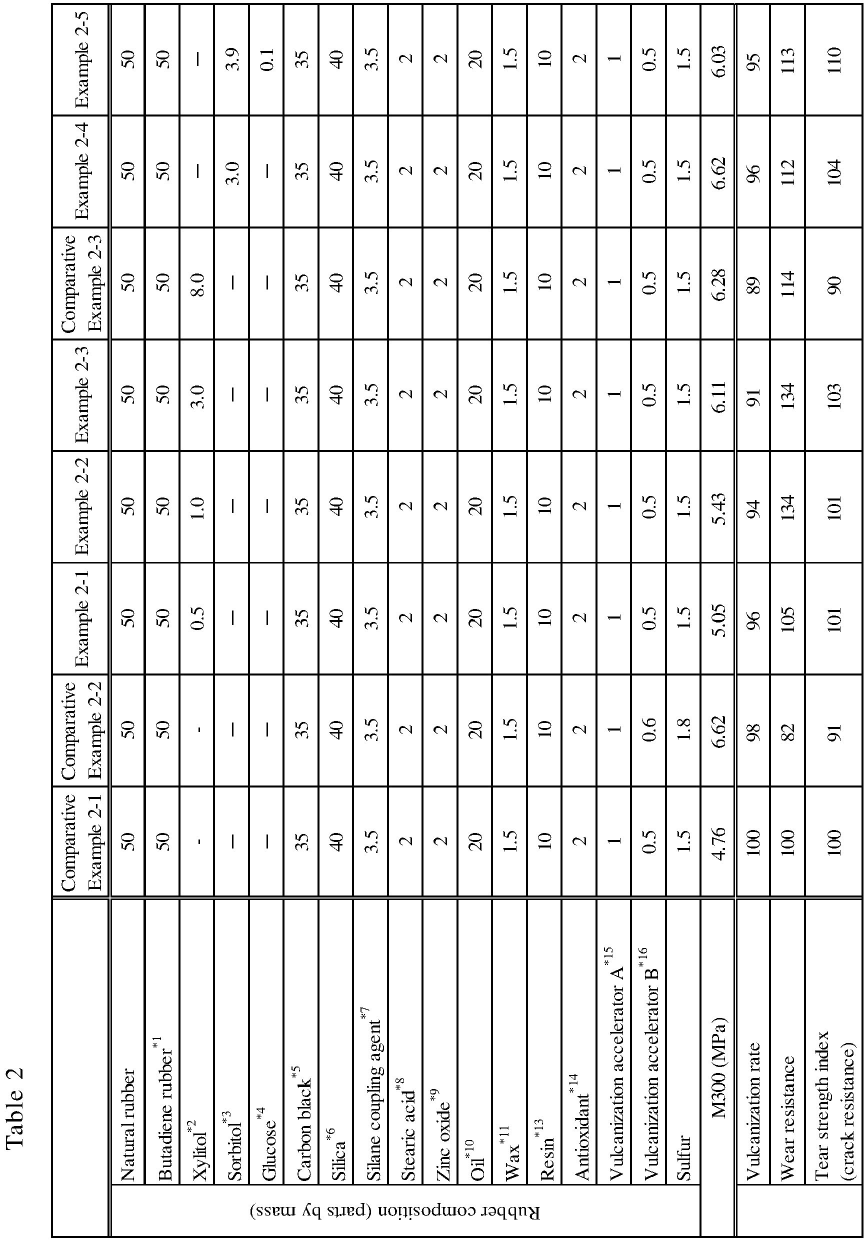

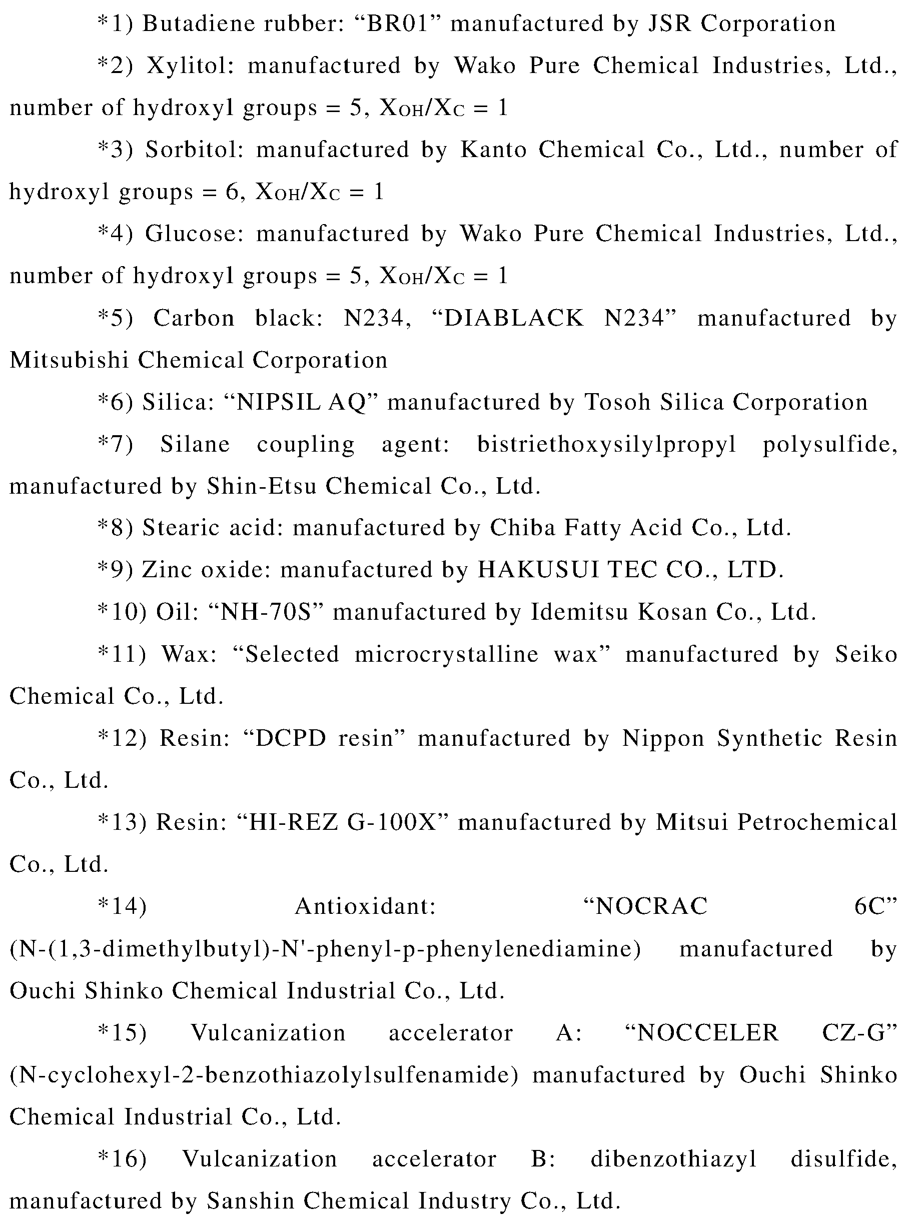

It was found from the results of Tables 1A to 1C that the rubber compositions of Examples were all able to accomplish good crack resistance and good wear resistance at the same time even with a low elastic modulus. In contrast, it was found that the rubber compositions of Comparative Examples were inferior to the rubber compositions of Examples in terms of any of the evaluation items and were also difficult to accomplish good crack resistance and good wear resistance at the same time.

INDUSTRIAL APPLICABILITY

According to the present disclosure, it is possible to provide a rubber composition having good crack resistance and good wear resistance. According to the present disclosure, it is also possible to provide a cross-linked rubber composition, a rubber article and a tire, which have good crack resistance and good wear resistance.

## Claims

1. A rubber composition comprising:
a rubber component containing 30% by mass or more of a natural rubber; and
0.1 parts by mass or more and less than 5.0 parts by mass of a polyol per 100 parts by mass of the rubber component,
wherein the rubber composition has a 300% modulus (M300) of less than 7MPa.

2. The rubber composition of claim 1, wherein the polyol has more than 3 hydroxyl groups.

3. The rubber composition of claim 1 or 2, wherein a ratio of the number of hydroxyl groups to the number of carbon atoms of the polyol is greater than 0.5.

4. The rubber composition of any one of claims 1 to 3, wherein the polyol has a melting point of lower than 160°C.

5. The rubber composition of any one of claims 1 to 4, wherein the polyol comprises a linear polyol.

6. The rubber composition of any one of claims 1 to 5, wherein the polyol is at least one member selected from the group consisting of xylitol, sorbitol, mannitol, and galactitol.

7. The rubber composition of any one of claims 1 to 6, wherein a content of the polyol is 1.5 parts by mass to 4.0 parts by mass per 100 parts by mass of the rubber component.

8. The rubber composition of any one of claims 1 to 7, further comprising less than 40 parts by mass of carbon black per 100 parts by mass of the rubber component.

9. The rubber composition of claim 8, further comprising silica, wherein a total content of silica and carbon black is greater than 70 parts by mass per 100 parts by mass of the rubber component.

10. The rubber composition of any one of claims 1 to 9, further comprising 15 parts by mass or more of a softener per 100 pars by mass of the rubber component.

11. The rubber composition of any one of claims 1 to 10, further comprising sulfur and a vulcanization accelerator, wherein a content of the vulcanization accelerator is smaller than a content of sulfur.

12. A rubber article formed using the rubber composition of any one of claims 1 to 11.

13. A tire formed using the rubber composition of any one of claims 1 to 11.
